# EUROPEAN PATENT APPLICATION

(11) **EP 2 288 148 A1**
(43) Date of publication of application: **23.02.2011**
(21) Application number: 09766481.7
(22) Date of filing: 30.03.2009
(51) Int. Cl.: H04N 5/92, H04N 7/26, H04N 13/02

(54) **THREE-DIMENSIONAL VIDEO CONVERSION RECORDING DEVICE, THREE-DIMENSIONAL VIDEO CONVERSION RECORDING METHOD, RECORDING MEDIUM, THREE-DIMENSIONAL VIDEO CONVERSION DEVICE, AND THREE-DIMENSIONAL VIDEO TRANSMISSION DEVICE**

(30) Priority: 18.06.2008 JP 2008158825
(71) Applicant: Mitsubishi Electric Corporation, Tokyo 100-8310 (JP)
(72) Inventor: YUKAWA, Maki, Tokyo 100-8310 (JP); SHIMADA, Masaaki, Tokyo 100-8310 (JP)
(74) Representative: HOFFMANN EITLE
(86) International application number: PCT/JP2009/056456
(87) International publication number: WO 2009/154033

(57) **Abstract**

A three-dimensional video conversion recording device capable of recording three-dimensional video data on a recording medium after reducing data amount thereof, includes a separating unit 10 for separating an inputted three-dimensional video stream into a plurality of video streams, a decoding unit 11 for decoding at least one of the plurality of separated video streams, a frame thinning unit 13 for reducing data amount of the decoded video stream, an encoding unit 14 for encoding the video stream whose data amount is reduced, a multiplexing unit 15 for multiplexing other video streams which are video streams other than the video stream inputted to the decoding unit 11 out of the plurality of separated video streams and the encoded video stream, and a recording unit for recording the multiplexed video data on a recording medium 21.

## Description

### TECHNICAL FIELD

The present invention relates to a three-dimensional video conversion recording device and a three-dimensional video conversion recording method for recording video data for stereoscopic display (three-dimensional video data) on a recording medium after reducing data amount thereof, a recording medium on which multiplexed video data is recorded, a three-dimensional video conversion device, and a three-dimensional video transmission device.

### BACKGROUND ART

A method of transmitting three-dimensional video data is disclosed in Patent Document 1, for example. In this transmitting method, each of left-eye video data and right-eye video data is formed by a predetermined number of bits on a pixel basis, one of the left-eye video data and the right-eye video data is added to the other per pixel, and transmission is performed at a timing synchronized with a pixel clock.

Patent Document 1: Japanese Patent Kokai Publication No. 2007-336518 (Abstract and FIG. 4)

### DISCLOSURE OF THE INVENTION

### PROBLEMS TO BE SOLVED BY THE INVENTION

However, data amount of three-dimensional video data to be transmitted according to the above-mentioned transmitting method is twice as much as that of two-dimensional video data per pixel. For this reason, recording the three-dimensional video data requires a recording capacity (a disk capacity) approximately twice as much as that in a case of recording the two-dimensional video data, and thus there is a problem that a recordable time by a recording device is shorter or that a recording device is required to have a larger capacity. Especially, in a case of recording high-resolution three-dimensional video data of 1920 horizontal pixels and 1080 vertical lines or more (also referred to as 'full high definition'), it is not possible to record and store many programs due to lack of a disk capacity of a recording device.

The present invention is made to solve the above-mentioned problems of the conventional art, and an object of the present invention is to provide a three-dimensional video conversion recording device and a three-dimensional video conversion recording method capable of recording three-dimensional video data on a recording medium after reducing data amount thereof, the recording medium on which multiplexed video data is recorded, a three-dimensional video conversion device, and a three-dimensional video transmission device.

### MEANS OF SOLVING THE PROBLEM

The three-dimensional video conversion recording device according to the present invention includes a reducing means for reducing data amount of at least one of a plurality of video data forming a three-dimensional video image; an encoding means for encoding the video data whose data amount is reduced and outputting the encoded video data; a multiplexing means for multiplexing video data other than the video data whose data amount is reduced out of the plurality of video data forming the three-dimensional video image and the encoded video data whose data amount is reduced; a recording means for recording the multiplexed video data generated by the multiplexing means on a recording medium; a setting storing means for storing a set value for deciding a manner of reducing the data amount by the reducing means; and a controlling means for controlling operation of the reducing means; the controlling means outputting a control signal based on the set value which is stored in the setting storing means to the reducing means, and the reducing means reducing the data amount of video data on the basis of the control signal and outputting the video data whose data amount is reduced to the encoding means.

Further, the three-dimensional video conversion recording method according to the present invention includes the steps of: storing a set value for deciding a manner of reducing data amount of a plurality of video data forming a three-dimensional video image; reducing data amount of at least one of the plurality of video data forming the three-dimensional video image on the basis of the set value; encoding the video data whose data amount is reduced by the reducing step and outputting the encoded video data; multiplexing video data other than the video data whose data amount is reduced out of the plurality of video data forming the three-dimensional video image and the encoded video data whose data amount is reduced; and recording the multiplexed video data generated at the multiplexing step on a recording medium.

Furthermore, a recording medium is characterized in that the multiplexed video data is recorded thereon by the above-mentioned three-dimensional video conversion recording device or three-dimensional video conversion recording method according to claim 1.

### EFFECTS OF THE INVENTION

The three-dimensional video conversion recording device, the three-dimensional video conversion recording method, and the recording medium according to the present invention have advantageous effects that data amount of three-dimensional video data to be recorded by the recording means can be reduced and a recording area can be effectively used, after reducing data amount of at least one video data of a plurality of video data which are separated from the three-dimensional video data. Moreover, the three-dimensional video conversion device according to the present invention has an advantageous effect that a size of data which is generated as a result of a conversion can be reduced. The three-dimensional video transmission device according to the present invention has an advantageous effect that a size of data to be transmitted can be reduced.

### BRIEF DESCRIPTION OF THE DRAWINGS

FIG. is a block diagram schematically illustrating a structure of a three-dimensional video conversion recording device according to a first embodiment of the present invention (i.e., an apparatus which implements a three-dimensional video conversion recording method according to the first embodiment).
FIG. 2 is an explanatory diagram illustrating a video frame sequence for a left eye which is output from a separating unit to a multiplexing unit, and a video frame sequence for a right eye which is output from a frame thinning unit.
FIG. 3 is a block diagram schematically illustrating a structure of a scene change detecting unit illustrated in FIG. 1.
FIG. 4 is a diagram illustrating an example of files and a data structure to be recorded in the three-dimensional video conversion recording device according to the first embodiment.
FIG. 5A and FIG. 5B are diagrams illustrating a structure of a sequence header and a structure of a sequence display of MPEG-2 video data to be recorded by the three-dimensional video conversion recording device according to the first embodiment.
FIG. 6A and FIG. 6B are diagrams illustrating a two-dimensional video frame and a depth information frame which are separated in a three-dimensional video conversion recording device according to a second embodiment of the present invention.
FIG. 7 is a block diagram schematically illustrating a structure of a three-dimensional video conversion recording device according to a third embodiment of the present invention (i.e., an apparatus which implements a three-dimensional video conversion recording method according to the third embodiment).
FIG. 8 is a diagram illustrating a trimming area which is trimmed by a trimming unit of the three-dimensional video conversion recording device according to the third embodiment.
FIG. 9 is a block diagram schematically illustrating a structure of a three-dimensional video conversion recording device according to a fourth embodiment of the present invention (i.e., an apparatus which implements a three-dimensional video conversion recording method according to the fourth embodiment).
FIG. 10 is a block diagram schematically illustrating a structure of a three-dimensional video conversion recording device according to a fifth embodiment of the present invention (i.e., an apparatus which implements a three-dimensional video conversion recording method according to the fifth embodiment).
FIG. 11A and FIG. 11B are diagrams illustrating a checkered pattern for thinning frame pixels and a pattern for thinning scanning lines in a three-dimensional video conversion recording device according to a sixth embodiment of the present invention (i.e., an apparatus which implements a three-dimensional video conversion recording method according to the sixth embodiment).
FIG. 12 is a diagram illustrating a 3D_Type structure of a three-dimensional video conversion recording device according to a seventh embodiment of the present invention (i.e., an apparatus which implements a three-dimensional video conversion recording method according to the seventh embodiment).
Fig. 13 is a block diagram schematically illustrating a structure of a three-dimensional video conversion recording device according to an eighth embodiment of the present invention (i.e., an apparatus which implements a three-dimensional video conversion recording method according to the first embodiment).
FIG. 14 is a diagram illustrating a shift of an object which is detected in the three-dimensional video conversion recording device according to the eighth embodiment.
FIG. 15 is a block diagram schematically illustrating a structure of a three-dimensional video transmission device according to the first embodiment (i.e., an apparatus which implements the three-dimensional video transmitting method according to the first embodiment).

### BEST MODE FOR CARRYING OUT THE INVENTION

### First Embodiment

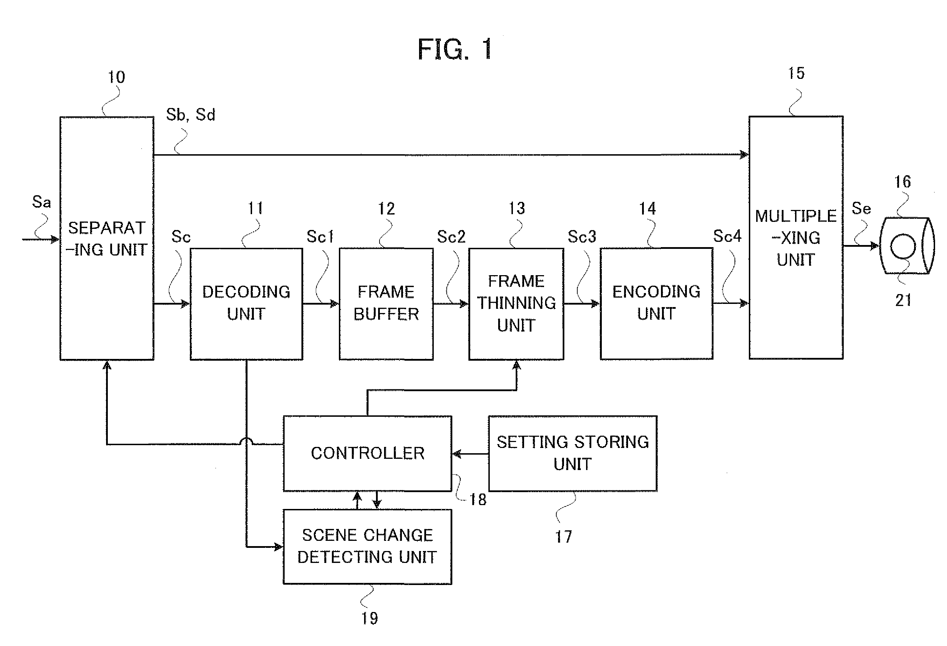

FIG. 1 is a block diagram schematically illustrating a structure of a three-dimensional video conversion recording device according to a first embodiment of the present invention (i.e., an apparatus which implements a three-dimensional video conversion recording method according to the first embodiment). As illustrated in FIG. 1, the three-dimensional video conversion recording device according to the first embodiment has a separating unit 10 for separating an input stream Sa which includes inputted three-dimensional video data into a plurality of video data (streams); a decoding unit 11, as a decoding means, for decoding at least one stream (e.g., right-eye video data (right-eye video stream) Sc) out of the plurality of separated streams and outputting the decoded data as video data Sc1; a frame buffer 12 for temporarily storing the video data Sc1; a frame thinning unit 13, as a reducing means, for thinning a frame in order to reduce data amount of video data Sc2 which is output from the frame buffer 12; an encoding unit 14, as an encoding means, for encoding video data Sc3 whose data amount is reduced and outputting the encoded data as video data Sc4; a multiplexing unit 15, as a multiplexing means, for multiplexing video data (stream) other than the video data Sc inputted to the decoding unit 11 out of the plurality of video data produced as a result of the separation by the separating unit 10 (e.g., left-eye video data (left-eye video stream) Sb, and an audio stream, a caption stream and the like Sd), and the video data Sc4 which is encoded by the encoding unit 14; and a recording unit (storage) 16, as a recording means, for recording multiplexed video data Se generated by the multiplexing unit 15 on a recording medium. The three-dimensional video conversion recording device according to the first embodiment has a setting storing unit 17, as a setting storing means, for holding a set value which is preset or set by a user input; a controller 18, as a controlling means, for controlling operations in a whole of the apparatus (operations at the separating unit 10 and the frame thinning unit 13, in particular); and a scene change detecting unit 19, as a characteristic change point detecting means, for detecting an image characteristic change point, from the decoded video data.

The separating unit 10 receives the input stream Sa which includes contents of a three-dimensional video data, as a transport stream (TS) or a program stream (PS), from a broadcasting receiver (not illustrated in the drawing), a removable disk reproducing apparatus (not illustrated in the drawing), a network (not illustrated in the drawing), or the like. The separating unit 10 performs processing to separate the input stream Sa into a video stream, an audio stream and a caption stream, for example, and to separate the video stream into a plurality of streams. If the video stream is a stream in which a left-eye video stream and a right-eye video stream are multiplexed, the separating unit 10 separates the left-eye video stream and the right-eye video stream from the input stream Sa, for example. In the first embodiment, an explanation will be made on a case where the left-eye video stream Sb which is separated by the separating unit 10 is input to the multiplexing unit 15 and the right-eye video stream Sc which is separated by the separating unit 10 is input to the decoding unit 11, in accordance with a setting stored in the setting storing unit 17. However, there may be another case that the right-eye video stream is input to the multiplexing unit 15 and the left-eye video stream is input to the decoding unit 11. If the video stream is formed by the left-eye video stream and the right-eye video stream which are different streams and multiplexed with each other, the separating unit 10 separates, from the input stream Sa, the left-eye video stream and the right-eye video stream, for example. If the video stream is formed by the left-eye video stream and the right-eye video stream which are not different streams, for example, if the video stream is a single stream which includes the left-eye video data and the right-eye video data, the separating unit 10 separates the stream which includes the left-eye video stream and the right-eye video stream, into the left-eye video stream and the right-eye video stream.

In the first embodiment, either setting content (e.g., a set value) that the video image for the left eye is valued above the video image for the right eye or setting content that the video image for the right eye is valued above the video image for the left eye is stored in the setting storing unit 17. If it is set that the video image for the left eye is valued above the video image for the right eye, the left-eye video stream Sb which is unprocessed is inputted to the multiplexing unit 15, and the right-eye video stream Sc is processed (frame thinning processing, in the first embodiment) and then inputted to the multiplexing unit 15. On the other hand, if it is set that the video image for the right eye is valued above the video image for the left eye, the right-eye video stream which is unprocessed is inputted to the multiplexing unit 15, and the left-eye video stream is processed and then inputted to the multiplexing unit 15. The setting content for this is stored in the setting storing unit 17 in advance or by a user input. The controller 18 outputs a control signal based on the setting content in the setting storing unit 17 to control operations of the separating unit 10 and the frame thinning unit 13. In the first embodiment, an explanation will be mainly made on a case where it is set that the video image for the left eye is valued above the video image for the right eye.

The setting storing unit 17 stores the setting content described above, which of the video image for the left eye and the video image for the right eye is valued, as well as a setting content of an image quality which will be described below. The three-dimensional video conversion recording device records, on the recording medium, video data whose data amount is reduced on the basis of these setting contents which are stored in the setting storing unit 17.

The decoding unit 11 decodes the right-eye video stream Sc, and outputs the decoded stream to the frame buffer 12. The frame buffer 12 stores the decoded right-eye video stream Sc1. On the basis of the control signal from the controller 18, the frame thinning unit 13 reads out the right-eye video stream Sc2 from the frame buffer 12, reduces data amount by performing frame thinning processing, and outputs to the encoding unit 14 the stream Sc3 which has a small data size. The encoding unit 14 encodes the stream Sc3, and outputs to the multiplexing unit 15 the stream Sc4 which has a reduced stream bit rate. For this reason, the encoding unit 14 calculates a bit rate and adds a new bit rate value.

The multiplexing unit 15 receives the unprocessed left-eye video stream Sb and the stream Sd such as audio or caption, as well as the processed right-eye video stream Sc, and multiplexes these streams. The recording unit (storage) 16 records, on the recording medium, the multiplexed stream Se which is outputted from the multiplexing unit 15.

Next, the operation at the frame thinning unit 13 will be explained. For recording by the three-dimensional video conversion recording device, there are the following two recording modes: recording reduced-quality images, with re-encoding, in order to record many programs (to obtain a longer recordable time); and recording high-quality images, without reducing the image quality to the upmost (without re-encoding). For example, if the setting stored in the setting storing unit 17 indicates that a user selects the recording with a high-image quality, a means for inputting the input stream Sa directly to the recording unit 16, not inputting to the separating unit 10, may be provided (not illustrated in the drawing). On the other hand, if the setting storing unit 17 stores the setting which enables to record many programs, the separating unit 10 extracts the right-eye video stream Sc and the decoding unit 11 decodes the right-eye video stream Sc to input to the frame buffer 12. In accordance with the image quality setting which is read out from the setting storing unit 17, the controller 18 controls an update timing of the frame buffer 12. The set value recorded in the setting storing unit 17 includes a value which indicates a degree of thinning frames. In accordance with an instruction by the controller 18, the frame thinning unit 13 takes in a same frame as many as designated by the set value. In moving picture compression processing, if a difference between a frame and a subsequent frame is small, an adverse influence on the image quality is small, even if a compression rate increases. For example, if video data which includes a succession of same frames is encoded, data amount of the section after the compression can be made to be 0, because a difference between the frames is 0.

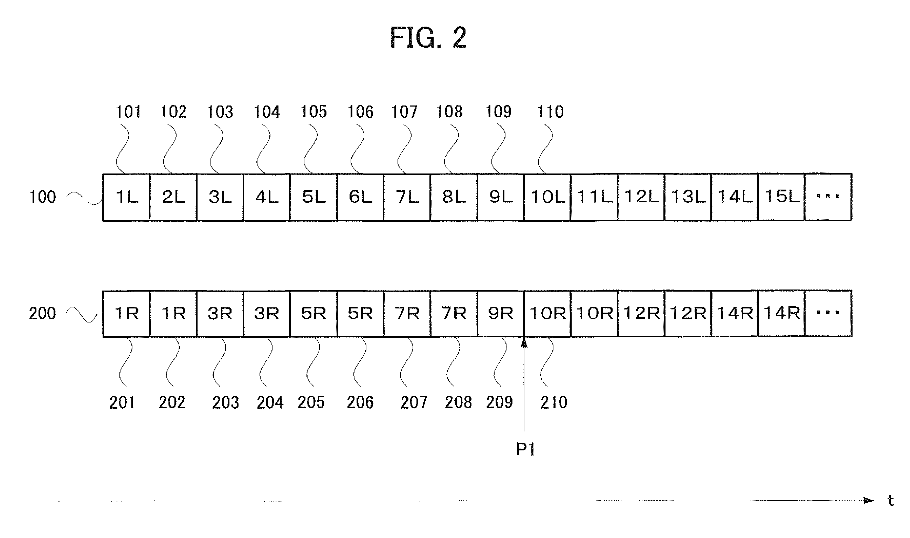

FIG. 2 is an explanatory diagram illustrating a video frame sequence for the left eye 100 which includes video frames for the left eye (1L, 2L, 3L, 4L, 5L, 6L, ...) outputted from the separating unit 10 to the multiplexing unit 15 and a video frame sequence for the right eye 200 which includes video frames for the right eye (1R, 1R, 3R, 3R, 5R, 5R, ...) outputted from the frame thinning unit 13. In FIG. 2, 't' represents a time axis. In FIG. 2, video frames for the left eye 101, 102, 103, 104, 105, 106, ... , correspond to video frames for the right eye 201, 202, 203, 204, 205, 206, ... , respectively. As illustrated in FIG. 2, in the first embodiment, the three-dimensional video conversion recording device outputs the video frames for the left eye without thinning. For example, the first input video frame 1L is outputted as the first video frame for the left eye 101; the second input video frame 2L is outputted as the second video frame for the left eye 102; the third input video frame 3L is outputted as the third video frame for the left eye 103; the fourth input video frame 4L is outputted as the fourth video frame for the left eye 104; the fifth input video frame 5L is outputted as the fifth video frame for the left eye 105; and the sixth input video frame 6L is outputted as the sixth video frame for the left eye 106. On the contrary, as illustrated in FIG. 2, in the first embodiment, the frame thinning unit 13 thins a video frame for the right eye to output. For example, the first input video frame 1R is outputted as the first video frame for the right eye 201; the first input video frame 1R is outputted as the second video frame for the right eye 202; the third input video frame 3R is outputted as the third video frame for the right eye 203; the third input video frame 3R is outputted as the fourth video frame for the right eye 204; the fifth input video frame 5R is outputted as the fifth video frame for the right eye 205; and the fifth input video frame 5R is outputted as the sixth video frame for the right eye 206. The stream sequence for the right eye 200 illustrated in FIG. 2 is an example of outputting data of the video frames for the right eye so that the same frame is repeated twice. In a case that data amount reduction rate is enhanced (i.e., in a case of the setting in which an image quality is reduced), the number of outputting the same frame may be increased, for example, the same frame may be repeated three times.

The controller 18 can control the frame thinning unit 13 so as not to perform thinning a frame in which a characteristic change point, such as a scene change, is detected by the scene change detecting unit 19. As illustrated in FIG. 2, when it is operated so that the same frame is repeated twice in the video frames for the right eye, if a scene change as a scene change point P1 is detected in a frame 10R, a frame 9R is not repeated (i.e., the frame thinning means 13 does not perform thinning), but the frame 10R in which the scene change is detected is displayed, as a video frame for the right eye 210, and then it is operated so as to repeat the same frame twice. A data compression rate can be improved by repeating the same frame, however, a viewer (user) may feel that the video image is strange (uncomfortable), if there is a large difference between video images of the video frames for the left eye and the video frames for the right eye (e.g., at the scene change point). If the scene change is detected as a result of scene change detection by the scene change detecting unit 19, the viewer can avoid feeling the video image to be strange by adopting a manner of outputting new frame data (the frame 10R in FIG. 2) to remove the state that the difference between the left-eye video data and for the right eye is extremely large. It is effective to control through the use of a result of detecting a characteristic change point by the scene change detecting unit 19, especially when a frame is repeatedly displayed many times (e.g., when a same frame is repeated many times in the frame sequence 200 in FIG. 2).

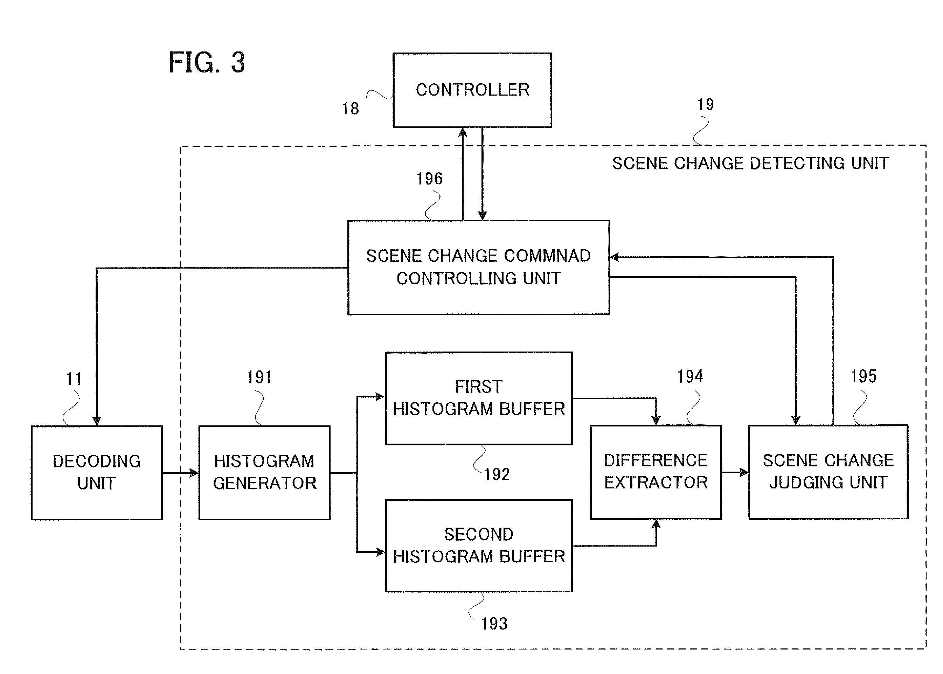

Fig. 3 is a block diagram schematically illustrating a structure of the scene change detecting unit 19 in FIG. 1. As illustrated in FIG. 3, the scene change detecting unit 19 has a histogram generator 191 for generating a histogram of decoded video data; a first histogram buffer 192 and a second histogram buffer 193 for holding the histogram generated at the histogram generator 191; and a difference extractor 194 for determining a difference between the histogram held in the first histogram buffer 192 and the histogram held in the second histogram buffer 193. The scene change extracting unit 19 has a scene change judging unit 195 for comparing the difference value determined at the difference extractor 194 with a preset threshold value, and a scene change command controlling unit 196 for controlling the scene change detecting unit 19 on the basis of a control signal, such as a scene change search start command, from the controller 18 and transmitting a result to the controller 18 if the scene change is detected.

By thinning a frame at the frame thinning unit 13 as described above, in an MPEG-2 video, for example, the encoding unit 14 can re-encode the right-eye video stream at a high compression rate. The encoding unit 14 adds a time stamp, when re-encoding the right-eye video stream. At this time, in order to synchronize the left-eye video stream Sb which is separated at the separating unit 10, with the right-eye video stream Sc4 through conversion processing, an extract at the decoding unit 11 is held as a time stamp before decoding the right-eye video stream Sc4. There are two kinds of time stamp: PTS (Presentation Time Stamp) and DTS (Decoding Time Stamp). Here, the PTS is held. The DTS is newly added at the encoding unit 14. Re-encoding processing is performed by using the time stamp which is held at the encoding unit 14. The compressed right-eye video stream is multiplexed with the left-eye video stream and other data such as audio and caption at the multiplexing unit 15, thereby the stream Se is obtained and recorded at the recording unit 16.

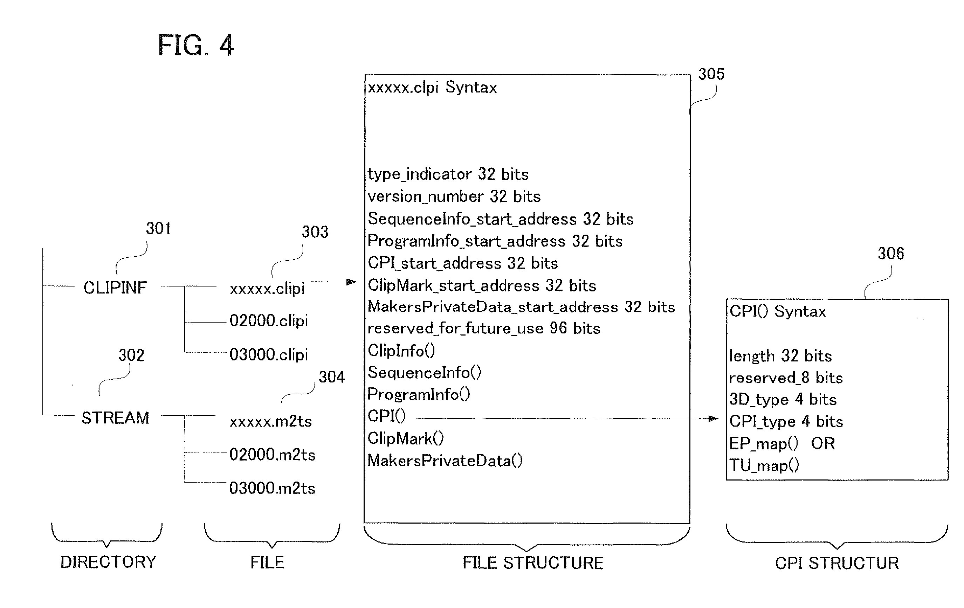

The recording unit 16 records metadata which indicates a data conversion state, in correlation with a stream. FIG. 4 is a diagram illustrating an example of files and a data structure to be recorded in the three-dimensional video conversion recording device according to the first embodiment. As illustrated in FIG. 4, the data to be recorded is correlated by using a CLIPINF (clip information) file 303 which has a similar filename to and a different filename extension from a file in which a structure stream is recorded. The CLIPINF file 303 is a subordinate file to a CLIPINF directory 301 and a stream file 304 is a subordinate file to a STREAM (stream) directory 302. In the CLIPLINF file 303, if a type of stream or a kind of stream changes in a middle of the stream, the change point is recorded. An example of a structure of the CLIPLINF file 303 is illustrated as a file structure 305. In the CLIPLINF file 303, CPI (Characteristic Point Information) which is information for correlating address information with time information in an AV stream file is recorded. In a CPI structure 306, a '3D_Type' flag, a type of three-dimensional video image, is newly provided to indicate which format of the three-dimensional video image the stream corresponds to. It is defined as follows, for example: if the CPI structure 306 has a '3D_Type' value of binary number '0000', an inputted stream is a stream of only ordinary two-dimensional video images (2D); if binary number '0001', the inputted stream is a three-dimensional video stream in which data amount of the right-eye video data is reduced; if binary number '0010', the inputted stream is a three-dimensional video stream in which data amount of the left-eye video stream is reduced; if binary number '0011', it is a three-dimensional video stream in which the data for the left eye and the data for the right eye are equivalently treated; if binary number '1011', it is a three-dimensional video stream which is a combination of two-dimensional video data and depth information data; and if binary number '1010', it is a three-dimensional video stream which is a combination of two-dimensional video data having reduced information amount of depth information described below and depth information data. When a stream is read out from the recording unit 16 and is reproduced, it can be determined whether it is three-dimensional video data in which conversion for reducing data amount is performed or three-dimensional video data whose data amount is reduced, by referring to the '3D_Type' information in the CPI structure 306 of the CLIPLINF, and a three-dimensional video image can be appropriately formed by switching video channels to be assigned for the left eye and for the right eye.

To display the input stream as a two-dimensional video image, by decoding only a stream on one of the two channels in which a data capacity is not reduced and by transmitting video data over a path for displaying the two-dimensional video image (not illustrated in the drawing), the input stream can be displayed as the two-dimensional video image.

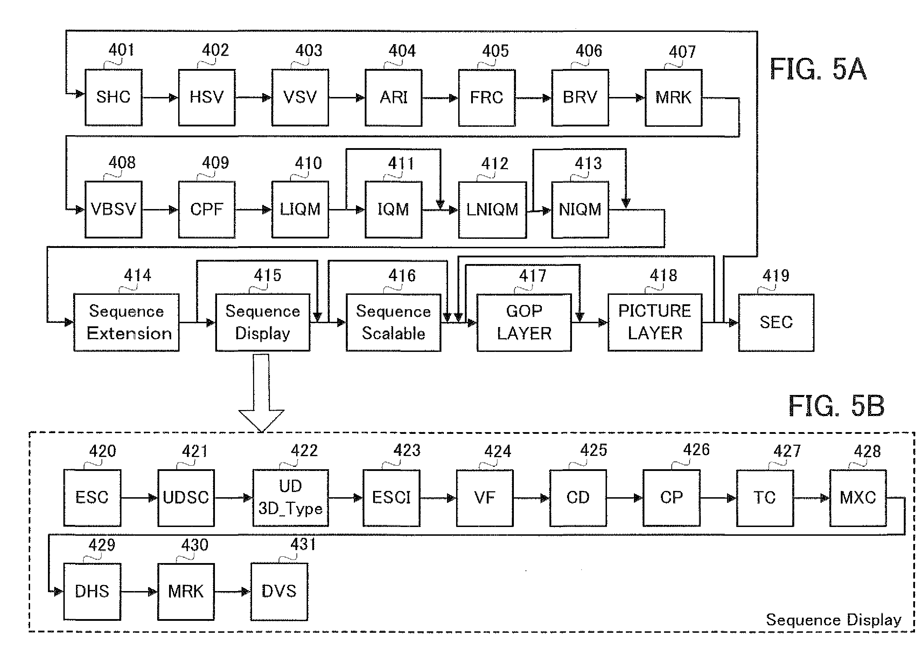

Although the above explanation describes an example that the CLIPINF file 303 is used to record stream information, the present invention is not limited to the example and a file other than the CLIPINF file may be used. For example, a manner of embedding three-dimensional video image information in a sequence header which is included in each GOP (Group Of Pictures) of an MPEG-2 video stream may be adopted. An example of a structure of the sequence header is illustrated in FIG. 5A and FIG. 5B. In FIG. 5A, reference numeral 401 denotes SHC (Sequence Header Code); 402 denotes HSV (Horizontal Size Value); 403 denotes VSV (Vertical Size Value); 404 denotes ARI (Aspect Ratio Information); 405 denotes FRC (Frame Rate Information); 406 denotes BRV (Bit Rate Value); 407 denotes MRK (Marker Bit); 408 denotes VBSV (VBV Buffer Size Value); 409 denotes CPF (Constrained Parameter Flag); 410 denotes LIQM (Load Intra Quantizer Matrix); 411 denotes IQM (Intra Quantizer Matrix); 412 denotes LNIQM (Load Non Intra Quantizer Matrix); 413 denotes NIQM (Non Intra Quantizer Matrix); 414 denotes Sequence Extension (sequence extension); 415 denotes Sequence Display (sequence display); 416 denotes Sequence Scalable (sequence scalable); 417 denotes a GOP layer; 418 denotes a picture layer; and 419 denotes SEC (Sequence End Code). FIG. 5B illustrates the Sequence Display 415 in detail. In FIG. 5B, reference numeral 420 denotes ESC (Extension Start Code); 421 denotes UDSC (User Data Start Code); 422 denotes UD (User Data); 423 denotes ESCI (Extension Start Code Identifier); 424 denotes VF (Video Format); 425 denotes CD (Color Description); 426 denotes CP (Color Primaries); 427 denotes TC (Transfer Characteristics); 428 denotes MXC (Matrix Coeffients); 429 denotes DHS (Display Horizontal Size); 430 denotes MRK (Marker Bit); and 431 denotes DVS (Display Vertical Size).

In a sequence layer, the following data are added: a sync code which is denoted as the UDSC 421 in FIG. 5B and indicates start synchronization of 32-bit length user data, and data for a user which is denoted as the UD (3D_Type) 422 and has a bit length of a multiple of 8. These data may be positioned wherever extension data can be inserted, and FIG. 5B illustrates an example that these data are placed after the ESC 420. The addition of 8-bit 3D_Type information as the UD 422 enables to determine whether an image type of a stream is a three-dimensional or two-dimensional video image, for each of the GOP. Thus, when data which is correlated with the stream information is recorded, a user can select to view as the two-dimensional or three-dimensional video image at viewing.

As described above, according to the three-dimensional image conversion recording device and the method of the first embodiment, by reducing data amount of at least one of a plurality of video streams which are separated from three-dimensional video data, data amount of the three-dimensional video data to be recorded by the recording unit 16 can be reduced. Moreover, in a recording medium on which the three-dimensional video data is recorded by the three-dimensional image conversion recording device and the method, its recording area can be effectively used.

A video image of two-dimensional video data whose information amount is reduced is seen to have a less image quality. However, a three-dimensional video image formed by two video data is seen not to be damaged in its image quality, even if an information amount of one of the two video data decreases, because the video data is corrected by mixing with the other video data which has a much information amount. Thus, there is an effect that a data size of video data to be recorded on a recording medium can be reduced so as not to reduce an image quality in appearance comparatively, by reducing an information amount of one of video data in a three-dimensional video data.

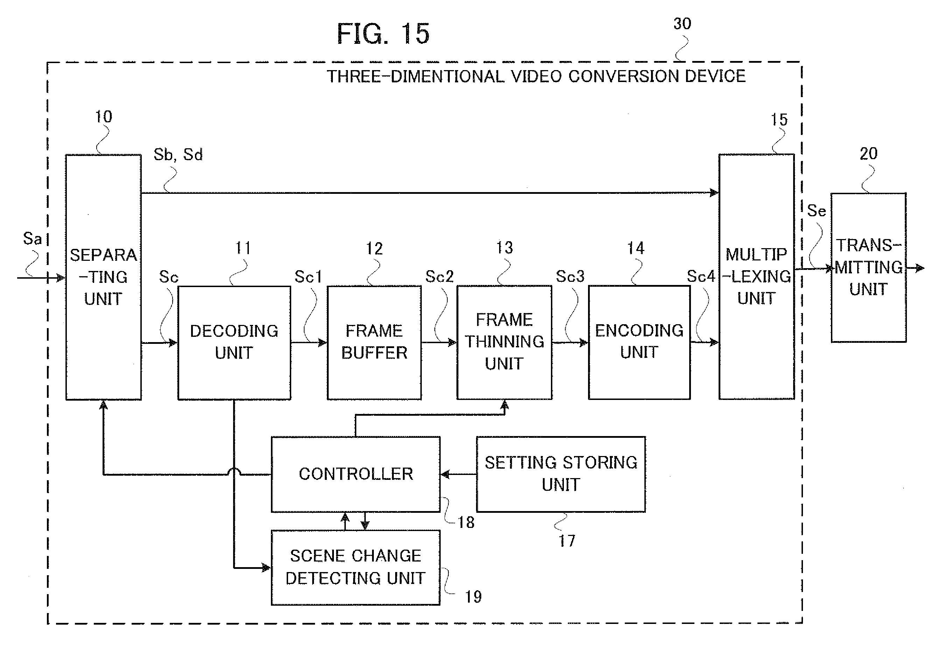

The method of producing a stream whose data amount is reduced in the first embodiment may be applied to a three-dimensional video transmission device (reference numeral 20 in FIG. 15), as well as to the three-dimensional video recording device.

A stream whose data amount is thus reduced is separated into video data, audio data and other data through the separating unit, these data are decoded by the decoding unit, thereby the stream can be reproduced.

Although the above explanation describes a case that reducing a data size of one of the separated two video streams is performed, reducing data sizes of both of the video streams may be performed. In this case, it is required to provide a side to which the stream Sb is outputted also with the same elements as the elements 11 to 19 in FIG. 1.

If it is not required to perform real time processing on the video stream, data before inputted to the multiplexing unit 15 in FIG. 1 is temporarily held in the recording unit 16, through a signal path which is not illustrated in the drawing. Then, data size reducing processing is performed on each of a plurality of video streams, and the data before inputted to the multiplexing unit 15 is held in the recording unit 16. After the data-size reducing processing on the video streams for forming a three-dimensional video image completes, the data which is temporarily held in the recording unit 16 is read out and is inputted to the multiplexing unit 15, thereby a single stream is formed and is stored in the recording unit 16.

Although an inputted three-dimensional video data is inputted to the separating unit 10 if it is multiplied, the separating unit 10 may not be provided if the video data is separated, and the video data may be directly inputted to the decoding unit 11. If the inputted three-dimensional video data have a decoding-free format, neither the separating unit 10 nor the decoding unit 11 may be provided, and the video data may be inputted to the frame buffer 12.

The data amount reducing method (i.e., the three-dimensional video converting method) according to the first embodiment can be also applied to the three-dimensional video conversion device or the three-dimensional video transmission device that a transmission device is added to the three-dimensional video conversion device. FIG. 15 is a block diagram illustrating a structure of the three-dimensional video transmission device according to the first embodiment (i.e., an apparatus which implements a three-dimensional video image transmitting method according to the first embodiment). In FIG. 15, elements which are the same as or correspond to those in FIG. 1 are denoted by the same reference numerals. The three-dimensional video transmission device of FIG. 15 has a transmission device 20 for transmitting multiplexed video data which is generated by a three-dimensional video conversion device 30, as a substitute for the recording unit 16, and this is a difference from the three-dimensional video conversion recording device of FIG. 1. In this case, there is an effect that a size of data which is generated or transmitted as a result of conversion can be reduced.

### Second Embodiment

In a three-dimensional video conversion recording device according to a second embodiment of the present invention, a video stream is separated by the separating unit 10 into two-dimensional video data (stream) 351 and depth information data (stream) 352. The second embodiment differs from the first embodiment in this regard. The second embodiment is the same as the first embodiment in the other points. For this reason, in the following explanation of the second embodiment, FIG. 1 will be also referred.

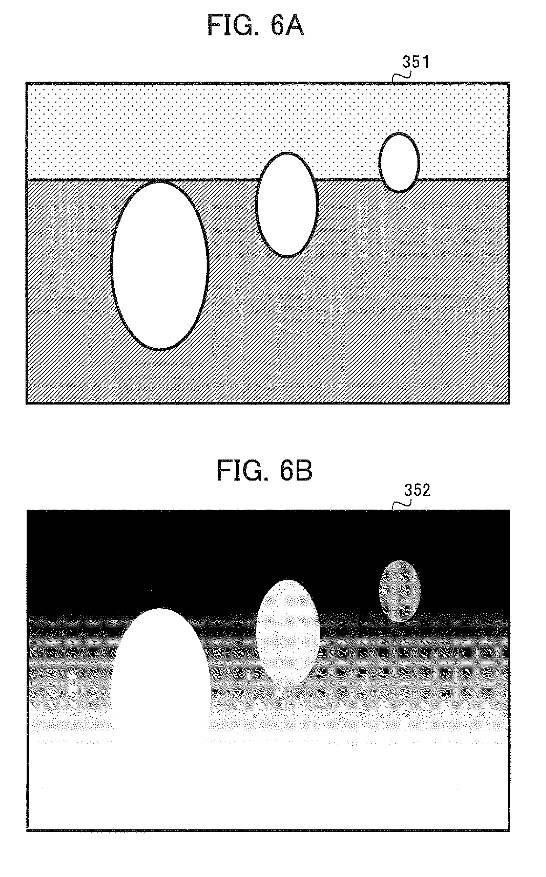

FIG. 6A and FIG. 6B are diagrams illustrating the two-dimensional video data 351 and the depth information data 352 which are separated in the three-dimensional video conversion recording device according to the second embodiment, respectively. As a manner of realizing a stereoscopic image, three-dimensional video data is formed by the two-dimensional video data and the depth information data, as illustrated in FIG. 6A and FIG. 6B. The two-dimensional video data 351 illustrated in FIG. 6A is two-dimensional video data which includes brightness information and color information. The depth information data 352 illustrated in FIG. 6B is data which expresses information on depth for each pixels corresponding to the two-dimensional video data illustrated in FIG. 6A, as depth information. In FIG. 6B, the depth information is expressed by shades in black color from value 0 (black) to value 255 (white), a whitest portion (value 255) indicates to be in the most anterior position (closest position), and a blackest portion (value 0) indicates to be in the most posterior position (farthest position). By displaying the two-dimensional video data illustrated in FIG. 6A with the addition of the depth information data illustrated in FIG. 6B, the three-dimensional video image can be expressed.

In the three-dimensional video conversion recording device of the second embodiment, the input stream Sa is separated into the two-dimensional video stream and the depth information stream, not into a left-eye video stream and a right-eye video stream as in the first embodiment. Another data Sd of audio, caption, or the like which has no relation to image display is inputted to the multiplexing unit 15, apart from the separated video stream, and is inputted to the multiplexing unit 15 without decoded. In the second embodiment, data amount reduction processing is implemented by inputting the two-dimensional video data directly to the multiplexing unit 15 and inputting the depth information data to the decoding unit 11, for example. However, in the second embodiment, the data amount reduction processing may be implemented by inputting the depth information data directly to the multiplexing unit 15 and inputting the two-dimensional video data to the decoding unit 11, for example.

According to the three-dimensional image conversion recording device and the three-dimensional image conversion recording method of the second embodiment, by reducing data amount of at least one of the two-dimensional video data and the depth information data which are separated from the three-dimensional video data, data amount of the three-dimensional video data to be recorded can be reduced. Moreover, in a recording medium on which the three-dimensional video data is recorded by the three-dimensional image conversion recording device and the three-dimensional image conversion recording method, its recording area can be effectively used.

The data amount reducing method according to the second embodiment can be applied to a transmission device for transmitting a three-dimensional video image. Moreover, the data amount reducing method according to the second embodiment (i.e., a three-dimensional video converting method) can be applied to a three-dimensional video conversion device or a three-dimensional video transmission device that the transmission device is added to the three-dimensional video conversion device. In this case, there is an effect that a size of data which is generated or transmitted as a result of conversion can be reduced.

### Third Embodiment

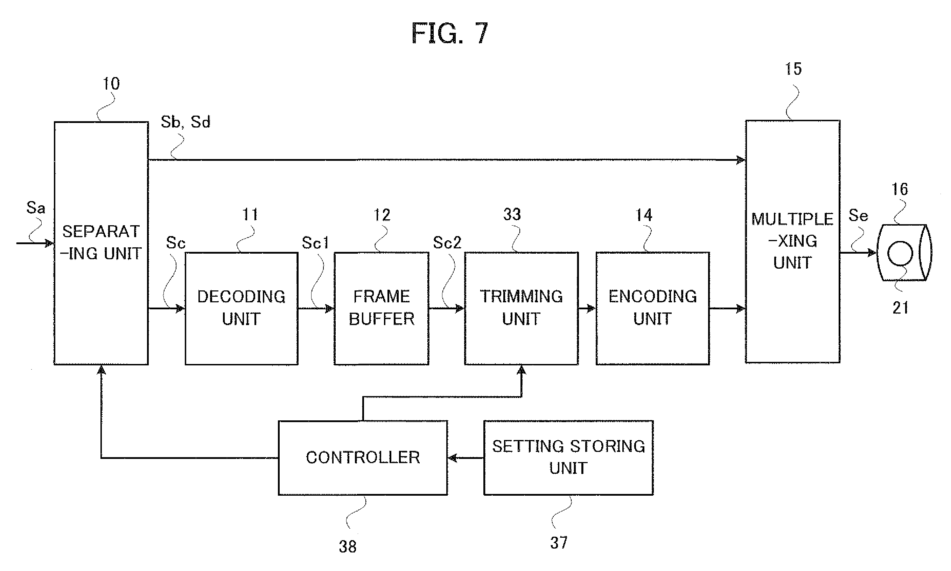

FIG. 7 is a block diagram schematically illustrating a structure of a three-dimensional video conversion recording device according to a third embodiment of the present invention (i.e., an apparatus which implements a three-dimensional video conversion recording method according to the first embodiment). In FIG. 7, elements which are the same as or correspond to those in FIG. 1 are denoted by the same reference numerals. The three-dimensional video conversion recording device according to the third embodiment differs from the three-dimensional video conversion recording device according to the first embodiment as follows: a trimming unit 33 illustrated in FIG. 7 is included as a substitute for the frame thinning unit 13 illustrated in FIG. 1; the scene change detecting unit 19 illustrated in FIG. 1 is not included; a set value which is stored in a setting storing unit 37; and control contents of a controller 38. The third embodiment is the same as the first or the second embodiment in the other points.

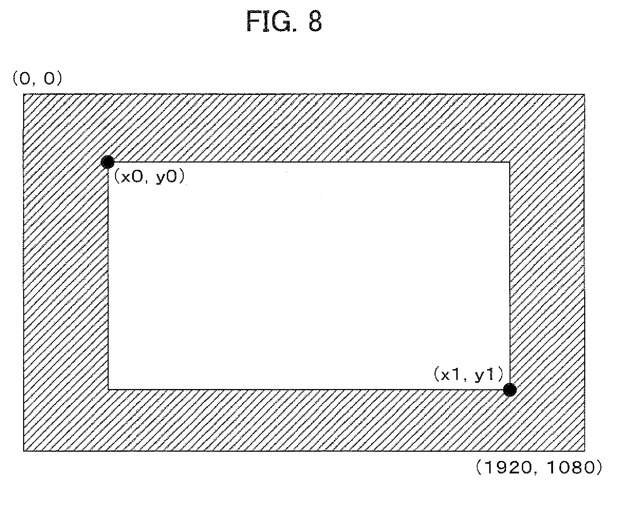

In the three-dimensional video conversion recording device according to the third embodiment, a process from an input of the input stream Sa till an input of the data to the frame buffer 12 is the same as that in the first embodiment. The controller 38 causes the trimming processing unit 33 to perform trimming processing, on the basis of a set value of a trimming range which is read out from the setting storing unit 37. FIG. 8 is a diagram illustrating the trimming range by the trimming unit 33 in the three-dimensional video conversion recording device according to the third embodiment. FIG. 8 illustrates a case that a video image of 1920 × 1080 pixels resolution is addressed. The trimming range is designated by an upper-left coordinate (x0, y0) and a lower-right coordinate (x1, y1, for example. Both of x0 and x1 are integers which are equal to or greater than 0 and smaller than or equal to 1920; both of y0 and y1 are integers which are equal to or greater than 0 and smaller than or equal to 1080; and x0 < x1 and y0 < y1. In FIG. 8, video information in a hatched area by slanting lines (a trimming area) is deleted, and video information in a rectangular area (in white color) which has the points (x0, y0) and (x1, y1) as opposite angles is transmitted to the encoding unit 14. The encoding unit 14 performs encoding processing, upon a consideration that the video information of the trimming area which is hatched by the slanting lines in FIG. 8 is unchanged information. Through the processing (processing upon a consideration that a difference between frames in the trimming area is 0), data amount after compression can be reduced.

According to the three-dimensional image conversion recording device and the three-dimensional image conversion recording method of the third embodiment, by reducing data amount of at least one of video data which are separated from three-dimensional video data, data amount of the three-dimensional video data to be recorded can be reduced. Moreover, in a recording medium on which the video data is recorded by the three-dimensional image conversion recording device and the three-dimensional image conversion recording method, its recording area can be effectively used.

The data amount reducing method according to the third embodiment can be applied to a transmitting device for transmitting a three-dimensional video image. Moreover, the data amount reducing method according to the third embodiment (i.e., a three-dimensional video converting method) can be applied to a three-dimensional video conversion device or a three-dimensional video transmission device that the transmission device is added to the three-dimensional video conversion device. In this case, there is an effect that a size of data which is generated or transmitted as a result of conversion can be reduced.

### Fourth Embodiment

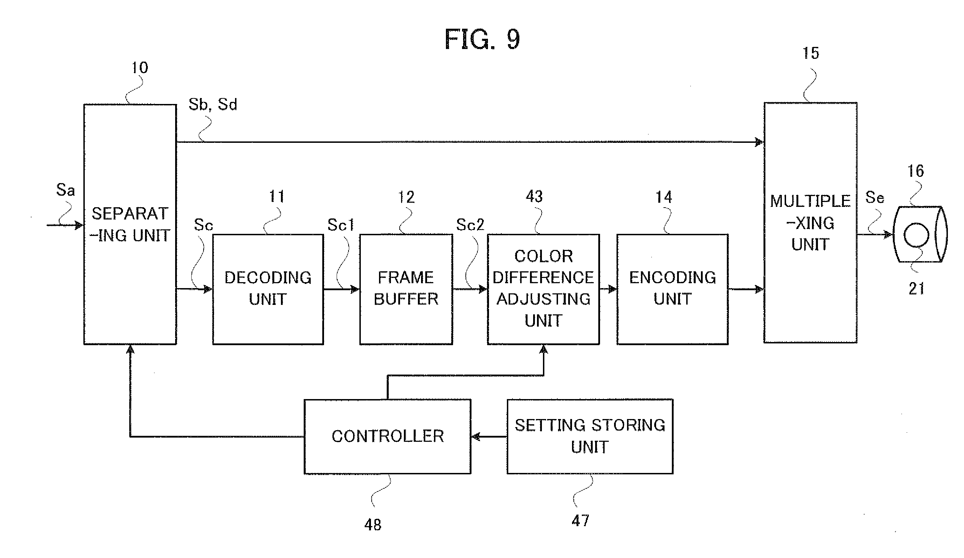

FIG. 9 is a block diagram schematically illustrating a structure of a three-dimensional video conversion recording device according to a fourth embodiment of the present invention (i.e., an apparatus which implements a three-dimensional video conversion recording method according to the first embodiment). In FIG. 9, elements which are the same as or correspond to those in FIG. 1 are denoted by the same reference numerals. The three-dimensional video conversion recording device according to the fourth embodiment differs from the three-dimensional video conversion recording device according to the first embodiment as follows: a color difference adjusting unit 43 illustrated in FIG. 9 is included as a substitute for the frame thinning unit 13 illustrated in FIG. 1; the scene change detecting unit 19 illustrated in FIG. 1 is not included; a set value which is stored in a setting storing unit 47; and control contents of a controller 48. The fourth embodiment is the same as any one of the first to third embodiments, in the other points.

In the three-dimensional video conversion recording device according to the fourth embodiment, a process from an input of the input stream Sa till an input of the data to the frame buffer 12 is the same as that in the first embodiment. The controller 48 causes the color difference adjusting unit 43 to perform reducing the number of bits of color difference information (i.e., to thin the color difference information), on the basis of a color difference adjustment value which is read out from the setting storing unit 47. For example, if all video signals are brightness signals and the number of bits of two color difference signals Y-R and Y-B are reduced to 0, an information amount per pixel is only an 8-bit brightness signal, and thus data amount can be reduced. The number of bits of the color difference signal after conversion is not limited to 0 bit, and can be set within a range of from 8 bits to 0 bit.

By transmitting the video data from which the color difference information is reduced to the encoding unit 14, the data after compression can be reduced in comparison with a case without the operation to thin the color difference information. The multiplexing unit 15 multiplexes stream data which are multiplexed and included in the input stream Sa with a video stream whose data amount is reduced, thereby a stream Se is produced, as well as in the first embodiment, and the recording unit 16 stores the stream Se.

In the manner that a stereoscopic image is produced by using a two-dimensional video image and depth information, the two-dimensional video image is not thinned but the depth information, for example. Because each pixel has 8-bit depth information, the depth information can be reduced by reducing the number of bits, and thus data amount can be reduced. In order to reduce a size of the data further, the number of bits per pixel of the two-dimensional video image may be reduced.

According to the three-dimensional image conversion recording device and the three-dimensional image conversion recording method of the fourth embodiment, by reducing data amount of at least one of video data which are separated from three-dimensional video data, data amount of the three-dimensional video data to be recorded can be reduced. Moreover, in a recording medium on which the video data is recorded by the three-dimensional image conversion recording device and the three-dimensional image conversion recording method, its recording area can be effectively used.

The data amount reducing method according to the fourth embodiment can be also applied to a transmission device for transmitting a three-dimensional video image. Moreover, the data amount reducing method according to the fourth embodiment (i.e., a three-dimensional video converting method) can be applied to a three-dimensional video conversion device or a three-dimensional video transmission device that the transmission device is added to the three-dimensional video conversion device. In this case, there is an effect that a size of data which is generated or transmitted as a result of conversion can be reduced.

### Fifth Embodiment

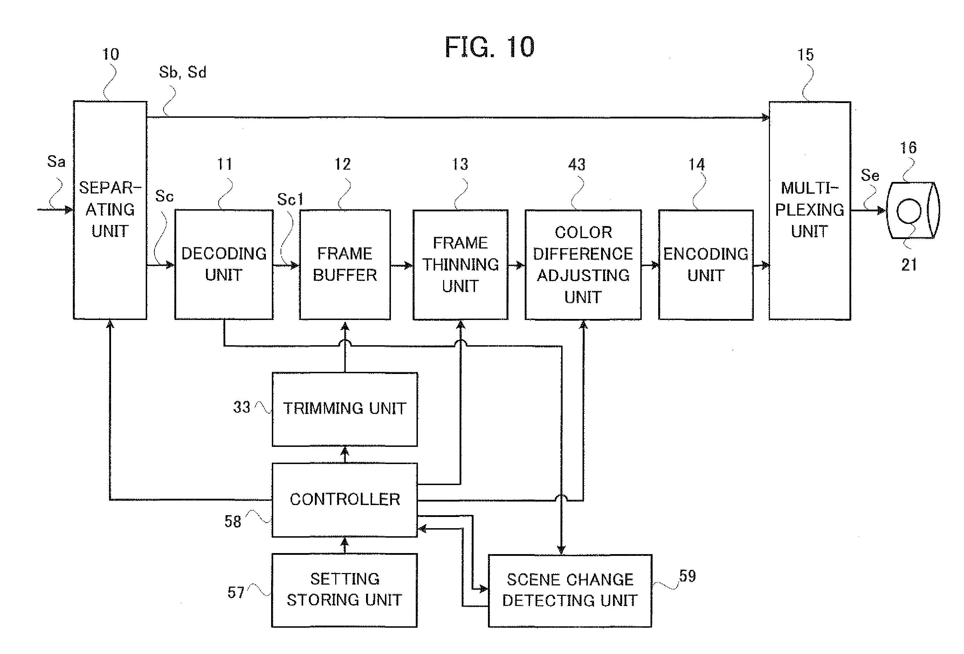

Although data amount is reduced for each video streams separately in the first to fourth embodiments, these may be performed in a combination. FIG. 10 is a block diagram schematically illustrating a structure of a three-dimensional video conversion recording device according to a fifth embodiment of the present invention (i.e., an apparatus which implements a three-dimensional video conversion recording method according to the first embodiment). In FIG. 10, elements which are the same as or correspond to those in FIG. 1, FIG. 7 or FIG. 9 are denoted by the same reference numerals. The three-dimensional video conversion recording device according to the fifth embodiment differs from the three-dimensional video conversion recording devices according to the first to fourth embodiments as follows: the frame thinning unit 13, the trimming unit 33 and the color difference adjusting unit 43 are provided as data amount reducing means; a set value which is stored in a setting storing unit 57; and control contents of a controller 58. The fifth embodiment is the same as any one of the first to fourth embodiments, in the other points.

In the three-dimensional video conversion recording device according to the fifth embodiment, a process till the input stream Sa is transferred to the frame buffer 12 is the same as that in the first embodiment. Video data in the frame buffer 12 is converted on the basis of the set value which is recorded in the setting storing unit 57. If a trimming range is set at the setting storing unit 57, data amount is reduced by the trimming processing at the trimming unit 23 described in the third embodiment, on the basis of a command from the controller 58. If a frame thinning condition is set in the setting storing unit 57, the frame thinning unit 13 performs the frame thinning processing described in the first or second embodiment, on the basis of a command from the controller 58. If the scene change detecting unit 19 is provided, it is set that new frame data is obtained when a scene change occurs, as described in the first embodiment. If a condition of adjusting the number of bits of a color difference signal is set in the setting storing unit 57, the color difference adjusting unit 43 performs the adjusting processing of the color difference signal described in the fourth embodiment, on the basis of a command from the controller 58. The other processings are the same as those in any one of the first to fourth embodiments.

According to the three-dimensional image conversion recording device and the three-dimensional image conversion recording method of the fifth embodiment, by reducing data amount of at least one of video data which are separated from three-dimensional video data, data amount of the three-dimensional video data to be recorded can be reduced. Moreover, in a recording medium on which the video data is recorded by the three-dimensional image conversion recording device and the three-dimensional image conversion recording method, its recording area can be effectively used.

Although the data amount reducing processing in the above explanation is performed in an order of trimming, frame thinning and color difference adjusting, the order may be changed.

Although the above explanation describes the case that the frame thinning unit 13, the trimming unit 33 and the color difference adjusting unit 43 are provided as the data amount reducing means, the apparatus may have two of these reducing means.

The data amount reducing method according to the fifth embodiment can be applied to a transmission device for transmitting a three-dimensional video image. Moreover, the data amount reducing method according to the fifth embodiment (i.e., a three-dimensional video converting method) can be applied to a three-dimensional video conversion device or a three-dimensional video transmission device that the transmission device is added to the three-dimensional video conversion device. In this case, there is an effect that a size of data which is generated or transmitted as a result of conversion can be reduced.

### Sixth Embodiment

A three-dimensional video conversion recording device according to a sixth embodiment of the present invention differs from the first embodiment in a manner of reducing data from a video stream which is separated at the separating unit 10, as data amount reducing means. The sixth embodiment is the same as the first embodiment in the other points. For this reason, FIG. 1 is also referred in an explanation of the sixth embodiment.

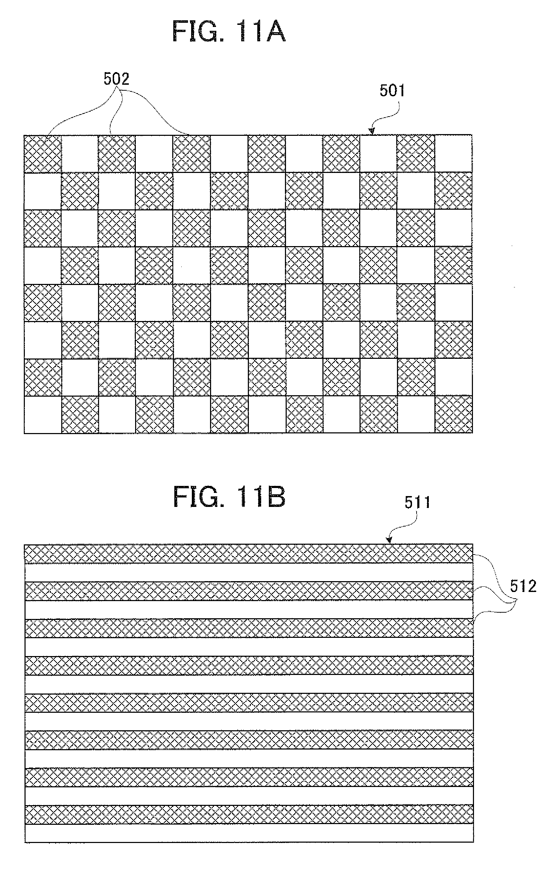

FIG. 11A and FIG. 11B illustrate patterns which are used for thinning processing in the three-dimensional video conversion recording device according to the sixth embodiment of the present invention (i.e., an apparatus which implements a three-dimensional video conversion recording method according to the sixth embodiment): FIG. 11A is a diagram illustrating a checkered thinning pattern 501; and FIG. 11B is a diagram illustrating a scanning-line thinning pattern 502. In the three-dimensional video conversion recording device according to the sixth embodiment, data amount is reduced by reducing crosshatched areas in the checkered pattern of FIG. 11A, for example, instead of thinning video data frame by frame. In the three-dimensional video conversion recording device according to the sixth embodiment, data may be reduced by reducing crosshatched scanning lines of FIG. 11B, for example. The pattern which is used for the data reducing is not limited to the patterns illustrated in the drawings. Data amount of each frame is thus reduced, thereby data amount after encoding can be reduced. Other processings are the same as those in any one of the first to fourth embodiments.

According to the three-dimensional image conversion recording device and the three-dimensional image conversion recording method of the sixth embodiment, by reducing data amount of at least one of video data which are separated from three-dimensional video data, data amount of the three-dimensional video data to be recorded can be reduced. Moreover, in a recording medium on which video data is recorded by the three-dimensional image conversion recording device and the three-dimensional image conversion recording method, its recording area can be effectively used.

Although the above explanation describes that the processing for reducing data amount is processing of reducing data in areas designated by a pattern, it may be configured that a discrete wavelet transform is used in encoding, as a substitute for or in addition to the processing. By the discrete wavelet transform, a high frequency component can be reduced and thereby an effect that a data size is reduced can be obtained.

The processing in the sixth embodiment may be combined with that in any one of the first to fifth embodiments.

The data amount reducing method according to the sixth embodiment can be also applied to a transmission device for transmitting a three-dimensional video image. Moreover, the data amount reducing method according to the sixth embodiment (i.e., a three-dimensional video converting method) can be applied to a three-dimensional video conversion device or a three-dimensional video transmission device that the transmission device is added to the three-dimensional video conversion device. In this case, there is an effect that a size of data which is generated or transmitted as a result of conversion can be reduced.

### Seventh Embodiment

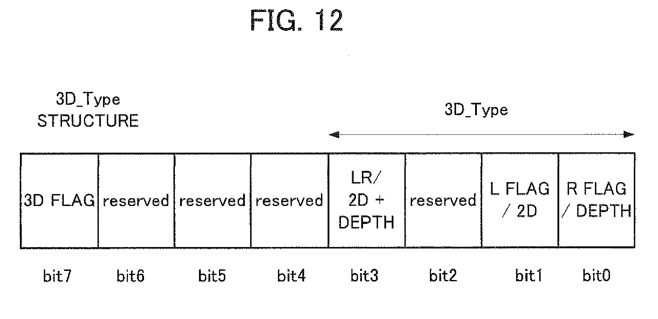

FIG. 12 is a diagram illustrating a data structure (3D_Type structure) which indicates a type of a three-dimensional video image of an inputted stream to a three-dimensional video conversion recording device according to a seventh embodiment of the present invention (i.e., an apparatus which implements a three-dimensional video conversion recording method according to the seventh embodiment). '3D_Type' which is embedded in a sequence header is disposed as 8-bit data in the UD 422 illustrated in FIG. 5B. 'bint7' in FIG. 12 is a three-dimensional video image flag; for example, if a value of the flag is 1, it is a three-dimensional video image, and if the value is 0, it is a two-dimensional video image. 'bit0' to 'bit3' indicate a type of the three-dimensional video image. For example, if a 3D_Type value is binary number '0000', it is a stream which includes only an ordinary two-dimensional video image; if binary number '0001', it is a three-dimensional video stream in which data amount of a video image for a right eye is reduced; if binary number '0010', it is a three-dimensional video stream in which data amount of a video image for a left eye is reduced; if binary number '0011', it is a three-dimensional video stream in which for the left eye and for the right eye are equivalent; if binary number '1011', it is a three-dimensional video stream which includes a combination of a two-dimensional video image and depth information; and if binary number '1010', it is a three-dimensional video stream which includes a combination of a two-dimensional video image in which an information amount of depth information is reduced and the depth information.

The left-eye video stream and the right-eye video stream are compared by measuring a video image histogram, and the three-dimensional video image flag bit7 is set in a position where a difference value between the streams exceeds a predetermined threshold. When the flag is off, information on the right-eye video data is reduced and the video image for the left eye is displayed as a video image for the right eye, at reproduction. When the three-dimensional video image flag is on at the reproduction, the video image for the right eye and the video image for the left eye are separately decoded and displayed, thereby only a portion where the three-dimensional video image is needed can be reproduced, and data amount of a portion where the three-dimensional video image is not needed can be reduced to data amount for a channel.

According to the three-dimensional image conversion recording device and the three-dimensional image conversion recording method of the seventh embodiment, by reducing data amount of at least one of video data which are separated from three-dimensional video data, data amount of the three-dimensional video data to be recorded can be reduced. Moreover, in a recording medium on which the video data is recorded by the three-dimensional image conversion recording device and the three-dimensional image conversion recording method, its recording area can be effectively used.

The data amount reducing method according to the seventh embodiment can be also applied to a transmission device for transmitting a three-dimensional video image. Moreover, the data amount reducing method according to the seventh embodiment (i.e., a three-dimensional video converting method) can be applied to a three-dimensional video conversion device or a three-dimensional video transmission device that the transmission device is added to the three-dimensional video conversion device. In this case, there is an effect that a size of data which is generated or transmitted as a result of conversion can be reduced.

### Eighth Embodiment

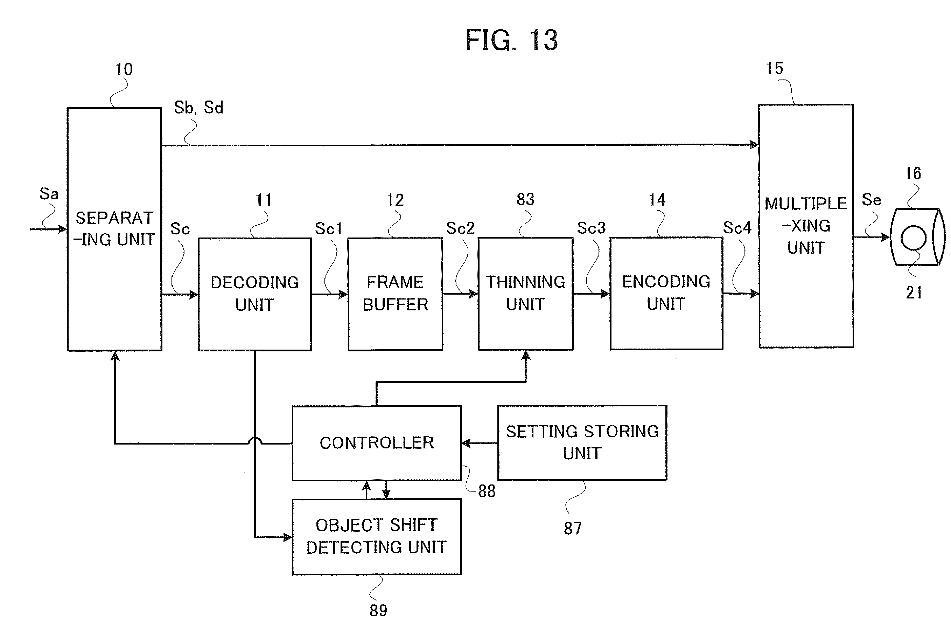

FIG. 13 is a block diagram schematically illustrating a structure of a three-dimensional video conversion recording device according to an eighth embodiment of the present invention (i.e., an apparatus which implements a three-dimensional video conversion recording method according to the first embodiment). In FIG. 13, elements which are the same as or correspond to those in FIG. 1 are denoted by the same reference numerals. The three-dimensional video conversion recording device according to the eighth embodiment differs from the three-dimensional video conversion recording device according to the first embodiment as follows: an object shift detecting unit 89 illustrated in FIG. 13 is provided as a substitute for the scene change detecting unit 19 illustrated in FIG. 1; processing contents of a thinning unit 83; a set value which is stored in a setting storing unit 87; and control contents of a controller 88.

In the three-dimensional video conversion recording device according to the eighth embodiment, the object shift detecting unit 89 detects a shift of an object, from video data which is separated at the separating unit 10 and decoded at the decoding unit 11. The setting storing unit 87 stores, in advance or by an input from a user, reference value data for determining whether the shift of the object is detected or not. If the shift of the object is detected by the object shift detecting unit 89, the controller 88 causes the thinning unit 83 to perform processing of thinning information in an area other than an area in which the shift of the object is detected.

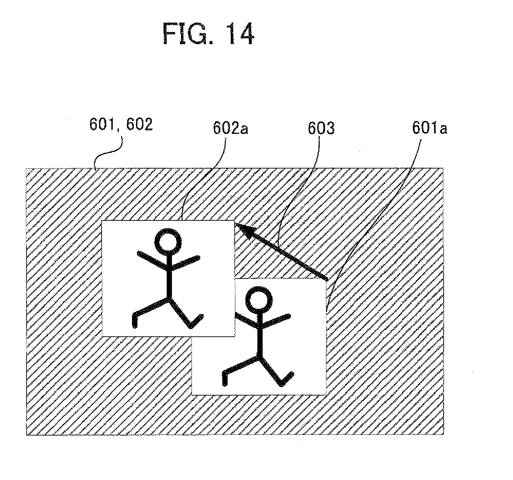

FIG. 14 is a diagram illustrating the shift of the object which is detected in the three-dimensional video conversion recording device according to the eighth embodiment. FIG. 14 illustrates that a video object 601a in a frame 601 at a certain moment shifts to a video object 602a, in a frame 602 which is behind the frame 601 by one or a few frames. A vector having a magnitude and a direction of the shift from the video object 601a to the video object 602a is represented by an arrow 603. If a histogram distribution of the frame which includes such a moving video object is determined, the histogram has no peak in an area other than the video objects 601a and 602a. Using this characteristic, a range which includes a movement in a frame is extracted, and data amount of a portion other than the portion which includes the movement (a portion which includes no movement) is reduced, without thinning data in the range which includes the movement.

According to the three-dimensional image conversion recording device or the three-dimensional image conversion recording method of the eighth embodiment, by reducing data amount of at least one of video data which are separated from three-dimensional video data, data amount of the three-dimensional video data to be recorded can be reduced. Moreover, in a recording medium on which the video data is recorded by the three-dimensional image conversion recording device and the three-dimensional image conversion recording method, its recording area can be effectively used.

According to the three-dimensional image conversion recording device or the three-dimensional image conversion recording method of the eighth embodiment, because data to be thinned is data in a range which includes no movement, thinning processing by the thinning unit has a little influence on a display image, and the video image can be reproduced so that a viewer does not feel the three-dimensional video image strange (uncomfortable).

The structure of the three-dimensional video conversion recording device according to the eighth embodiment can be combined with any one of the three-dimensional video conversion recording devices according to the first to seventh embodiments.

The data amount reducing method according to the eighth embodiment can be also applied to a transmission device for transmitting a three-dimensional video image. Moreover, the data amount reducing method according to the eighth embodiment (i.e., a three-dimensional video converting method) can be applied to a three-dimensional video conversion device or a three-dimensional video transmission device that the transmission device is added to the three-dimensional video conversion device. In this case, there is an effect that a size of data which is generated or transmitted as a result of conversion can be reduced.

### EXPLANATION OF REFERENCE NUMERALS AND SYMBOLS

10 separating unit; 11 decoding unit; 12 frame buffer; 13 frame thinning unit; 14 encoding unit; 15 multiplexing unit; 16 recording unit; 17, 37, 47, 57, 87 setting storing unit; 18, 38, 48, 58, 88 controller; 19 scene change detecting unit; 20 transmitting unit; 21 recording medium; 30 three-dimensional video conversion device; 33 trimming unit; 43 color difference adjusting unit; 83 thinning unit; 89 object shift detecting unit; 100 video frame sequence for left eye; 101 to 110 video frame for left eye; 200 video frame sequence for right eye; 201 to 210 video frame for right eye; 191 histogram generator; 192 first histogram buffer; 193 second histogram buffer; 194 difference extractor; 195 scene change judging unit; 196 scene change command controlling unit; 401 to 416 sequence header; 417 GOP layer; 418 picture layer; 419 SEC; 420 to 431 Sequence Display structure; 501 checkered thinning pattern; 502 scanning-line thinning pattern; 601, 602 frame; 601a object; 602a shifted object; 603 shift vector of object; Sa input stream; Sb video stream for left eye; Sc video stream for right eye; Sd stream; Se multiplexed stream; PI scene change point.

## Claims

1. A three-dimensional video conversion recording device comprising:
a reducing means for reducing data amount of at least one of a plurality of video data forming a three-dimensional video image;
an encoding means for encoding the video data whose data amount is reduced and outputting the encoded video data;
a multiplexing means for multiplexing video data other than the video data whose data amount is reduced out of the plurality of video data forming the three-dimensional video image and the encoded video data whose data amount is reduced;
a recording means for recording the multiplexed video data generated by the multiplexing means on a recording medium;
a setting storing means for storing a set value for deciding a manner of reducing the data amount by the reducing means; and
a controlling means for controlling operation of the reducing means;
the controlling means outputting a control signal based on the set value which is stored in the setting storing means to the reducing means, and
the reducing means reducing the data amount of video data on the basis of the control signal and outputting the video data whose data amount is reduced to the encoding means.

2. The three-dimensional video conversion recording device according to claim 1, wherein:
the plurality of video data include left-eye video data and right-eye video data, and
the video data whose data amount is reduced by the reducing means is the left-eye video data or the right-eye video data.

3. The three-dimensional video conversion recording device according to claim 1, wherein:
the plurality of video data include two-dimensional video data and depth information video data, and
the video data whose data amount is reduced by the reducing means is the two-dimensional video data or the depth information video data.

4. The three-dimensional video conversion recording device according to claim 1, wherein the reducing means determines a processing of reducing the data amount of the video data on the basis of the control signal.

5. The three-dimensional video conversion recording device according any one of claims 1 to 4, wherein the reducing means includes a frame thinning means for thinning a frame of the video data.

6. The three-dimensional video conversion recording device according to claim 5, further comprising a characteristic change point detecting means for detecting a characteristic change point of a video image in the video data,
wherein the controlling means controls the frame thinning means not to perform a processing of thinning a frame in which the characteristic change point is detected by the characteristic change point detecting means.

7. The three-dimensional video conversion recording device according to any one of claims 1 to 6, wherein the reducing means includes a trimming means for reducing information outside a designated range in a frame of the video data.

8. The three-dimensional video conversion recording device according to any one of claims 1 to 7, wherein the reducing means includes a color difference adjusting means for reducing a color difference component of the video data.

9. The three-dimensional video conversion recording device according to any one of claims 1 to 8, wherein the reducing means includes a pattern thinning means for thinning space information of a designated pattern in a frame from the video data.

10. The three-dimensional video conversion recording device according to any one of claims 1 to 9, further comprising an object shift detecting means for detecting a shift of an object from the video data,
wherein the reducing means thins information in an area other than an area in which the shift of the object is detected.

11. The three-dimensional video conversion recording device according to any one of claims 1 to 10, comprising:
a three-dimensional video image detecting means for detecting information indicating that a video stream included in an input stream is a three-dimensional video stream, the information being included in the input stream; and
a separating means for separating the three-dimensional video stream into the plurality of video data forming the three-dimensional video image, when the three-dimensional video image detecting means detects the information indicating to be the three-dimensional video stream.

12. A three-dimensional video conversion recording method comprising the steps of:
storing a set value for deciding a manner of reducing data amount of a plurality of video data forming a three-dimensional video image;
reducing data amount of at least one of the plurality of video data forming the three-dimensional video image on the basis of the set value;
encoding the video data whose data amount is reduced by the reducing step and outputting the encoded video data;
multiplexing video data other than the video data whose data amount is reduced out of the plurality of video data forming the three-dimensional video image and the encoded video data whose data amount is reduced; and
recording the multiplexed video data generated at the multiplexing step on a recording medium.

13. A recording medium on which the multiplexed video data is recorded by the three-dimensional video conversion recording device according to claim 1.

14. A recording medium on which the multiplexed video data is recorded by the three-dimensional video conversion recording method according to claim 12.

15. A three-dimensional video conversion device, comprising:
a reducing means for reducing data amount of at least one of a plurality of video data forming a three-dimensional video image;
an encoding means for encoding the video data whose data amount is reduced and outputting the encoded video data;
a multiplexing means for multiplexing video data other than the video data whose data amount is reduced out of the plurality of video data forming the three-dimensional video image and the encoded video data whose data amount is reduced, and outputting the multiplexed video data;
a setting storing means for storing a set value for deciding a manner of reducing the data amount by the reducing means; and
a controlling means for controlling operation of the reducing means;
the controlling means outputting a control signal based on the set value which is stored in the setting storing means to the reducing means, and
the reducing means reducing the data amount of video data on the basis of the control signal and outputting the video data whose data amount is reduced to the encoding means.

16. A three-dimensional video transmission device, comprising:
a reducing means for reducing data amount of at least one of a plurality of video data forming a three-dimensional video image;
an encoding means for encoding the video data whose data amount is reduced and outputting the encoded video data;
a multiplexing means for multiplexing video data other than the video data whose data amount is reduced out of the plurality of video data forming the three-dimensional video image and the encoded video data whose data amount is reduced;
a transmitting means for transmitting the multiplexed video data generated by the multiplexing means;
a setting storing means for storing a set value for deciding a manner of reducing the data amount by the reducing means; and
a controlling means for controlling operation of the reducing means;
the controlling means outputting a control signal based on the set value which is stored in the setting storing means to the reducing means, and
the reducing means reducing the data amount of video data on the basis of the control signal and outputting the video data whose data amount is reduced to the encoding means.
